# EUROPEAN PATENT APPLICATION

(11) **EP 4 749 167 A1**
(43) Date of publication of application: **27.05.2026**
(21) Application number: 24859480.6
(22) Date of filing: 15.08.2024
(51) Int. Cl.: F16K 31/06, F16K 27/00

(54) **SOLENOID VALVE ASSEMBLY WITH STOP VALVE AND STOP VALVE MODULE USED FOR SAME**

(30) Priority: 25.08.2023 JP 2023137426
(71) Applicant: SMC Corporation, Tokyo 104-0031 (JP)
(72) Inventor: SATO Hiroyuki, Tsukubamirai-shi, Ibaraki 300-2493 (JP); NOMURA Matoko, Tsukubamirai-shi, Ibaraki 300-2493 (JP)
(74) Representative: Keil & Schaafhausen Patentanwälte PartGmbB
(86) International application number: PCT/JP2024/029041
(87) International publication number: WO 2025/047444

(57) **Abstract**

[Abstract]

[Object] To provide a stop-valve-equipped solenoid valve assembly in which decrease in the flow rate of compressed air can be suppressed, and a stop valve module.

[Solution] A stop-valve-equipped solenoid valve assembly 1 includes stop valve modules 40, having stop valves 61, interposed between a plurality of solenoid valves 10 and a supply/exhaust base 20.

Each module has a first end 40a at one end in the longitudinal direction, an upper end surface 43a in which a plurality of upper openings are provided and to which a solenoid valve is connected, a lower end surface 43b in which a plurality of lower openings are provided and to which the supply/exhaust base is connected, and a communication passage group 44 including a plurality of communication passages that connect the upper and lower openings.

These communication passages include a supply communication passage 52. This supply communication passage includes first and second supply communication passages 52a and 52b, which extend further toward the first end side than a second exhaust communication passage 54, which is disposed on the extreme first end side in the communication passage group, and a passage communication portion 52c that connect end portions of the communication passages.

The stop valve opens and closes the passage communication portion.

## Description

### Technical Field

The present invention relates to: a stop-valve-equipped solenoid valve assembly in which a plurality of solenoid valves are connected in a row in the width direction and are mounted on a supply/exhaust base, such as a manifold, having a main supply passage and a main exhaust passage common to the solenoid valves; and to a stop valve module used for the stop-valve-equipped solenoid valve assembly.

### Background Art

A solenoid valve assembly in which a plurality of solenoid valves are mounted on a supply/exhaust base, such as a manifold, having a main supply passage and a main exhaust passage common to the solenoid valves is already known.

In this conventional solenoid valve assembly, when a specific solenoid valve is to be removed from the supply/exhaust base for replacement or the like, in order to prevent leakage of supply air, it is necessary to temporarily stop the supply of compressed air to the main supply passage, stop all the solenoid valves, and then remove the solenoid valve that needs to be replaced.

Hence, in the manifold-type solenoid valve described in PTL 1, between the solenoid valves and the manifold base, stop valves capable of individually shutting off the air supply to the solenoid valves are disposed.

By providing the stop valves, it is possible to remove a specific solenoid valve while keeping solenoid valves other than the specific solenoid valve operating.

Meanwhile, in recent years, in order to realize a compact solenoid valve assembly, it has been required to further reduce the width of the solenoid valves.

Hence, when the stop valves are disposed as disclosed in PTL 1, the width of the stop valve module including the stop valves also needs to be reduced as in the solenoid valves.

However, in the stop valve module disclosed in PTL 1, the cross-sectional area of a passage connecting a solenoid valve and the supply/exhaust base is narrowed by a valve rod, leading to a decrease in the flow rate of the compressed air.

### Citation List

### Patent Literature

PTL 1: Japanese Unexamined Utility Model Registration Application Publication No. 61-197364

### Summary of Invention

### Technical Problem

Accordingly, the technical problem of the present invention is to provide: a stop-valve-equipped solenoid valve assembly in which a stop valve is disposed between each of solenoid valves and a supply/exhaust base and in which decrease in the flow rate of compressed air can be suppressed as much as possible; and a stop valve module including the stop valve.

### Solution to Problem

In order to solve the above problem, a stop-valve-equipped solenoid valve assembly according to the present invention includes: a plurality of solenoid valves; a supply/exhaust base in which a main supply passage and a main exhaust passage are formed; and output ports provided corresponding to the plurality of solenoid valves, communication states between the output ports, the main supply passage, and the main exhaust passage being switched by individually operating the plurality of solenoid valves. The solenoid valve assembly is configured by disposing, between each of the plurality of solenoid valves and the supply/exhaust base, a stop valve module having a stop valve capable of individually shutting off air supply to the solenoid valve. The stop valve module includes: a first end and a second end provided at both ends in a longitudinal direction; an upper end surface in which a plurality of upper openings are provided and to which the solenoid valve is detachably connected; a lower end surface in which a plurality of lower openings are provided and to which the supply/exhaust base is connected; and a communication passage group including a plurality of communication passages through which the plurality of upper openings and the lower openings corresponding to the upper openings communicate. The plurality of communication passages include: a supply communication passage that communicates with the main supply passage to supply air to the solenoid valve; and an exhaust communication passage that communicates with the main exhaust passage to allow exhaust from the solenoid valve to pass therethrough. The supply communication passage includes: a first supply communication passage extending in the longitudinal direction and having an end on the second end side connected to a supply lower opening among the plurality of lower openings; and a second supply communication passage extending in the longitudinal direction and having an end on the second end side connected to a supply upper opening among the plurality of upper openings. Ends on the first end side of the first and second supply communication passages extend further toward the first end side than an outermost communication passage disposed on an extreme first end side in the communication passage group. The ends on the first end side of the first and second supply communication passages communicate with each other through a passage communication portion. The stop valve opens and closes the passage communication portion.

In this case, preferably, the plurality of upper openings are disposed parallel to each other in a row in the longitudinal direction in the upper end surface, the plurality of lower openings are disposed parallel to each other in a row in the longitudinal direction in the lower end surface, the stop valve module has a first side surface and a second side surface facing away from each other at both ends in a transverse direction, in the communication passage group, the plurality of communication passages, excluding the supply communication passage, extend in the vertical direction between the upper openings and the lower openings, and, among the plurality of communication passages, a communication passage extending in the vertical direction and disposed on the first end side with respect to the supply upper opening and the supply lower opening intersects the first and second supply communication passages in a state in which the first and second supply communication passages are disposed on the first side surface side thereof in side view.

Furthermore, preferably, the first side surface of the stop valve module is provided with a bulging portion projecting outward in the transverse direction and extending in the longitudinal direction, and the first and second supply communication passages are disposed parallel to each other on an inner side of the bulging portion in the transverse direction.

Furthermore, preferably, the first and second supply communication passages communicate with the supply lower opening and the supply upper opening through a first communication portion and a second communication portion, and ends on the second end side of the first and second supply communication passages are respectively connected to the first and second communication portions across side surfaces and bottom surfaces thereof.

Furthermore, preferably, a valve hole extending along an axis extending in the longitudinal direction is provided in the stop valve module, on the first end side with respect to the passage communication portion, and an end on the second end side of the valve hole is open to the passage communication portion, the stop valve provided with a valve body at an end on the second end side thereof is slidably accommodated in the valve hole, and, in the passage communication portion, a valve seat that is disposed on the axis and with which the valve body can be brought into and out of contact in accordance with reciprocation of the stop valve is provided.

Furthermore, preferably, the stop valve has an operating portion at an end on the first end side thereof and can be reciprocated in the axial direction of the valve hole between a closed position, at which the supply communication passage is closed, and an open position, at which the supply communication passage is open, by operating the operating portion, and the stop valve module further has a locking mechanism that forms a locking position, at which movement of the stop valve in the axial direction is prevented at the closed position, and a non-locking position, at which movement of the stop valve in the axial direction is allowed.

Furthermore, preferably, the operating portion has an operating shaft, the operating shaft being rotatably inserted into an operating hole connected to the valve hole, the locking mechanism includes an engaging portion provided on the operating shaft and an engaged portion provided in the operating hole, and rotation of the operating shaft enables selective switching between the locking position, at which the engaging portion and the engaged portion are engaged, and the non-locking position, at which the engagement between the engaging portion and the engaged portion is released.

Furthermore, preferably, the stop valve is provided with a spring member that urges the stop valve in a direction in which the valve body is separated from the valve seat, and when the operating portion is operated to the non-locking position, the stop valve is moved from the closed position to the open position by an urging force of the spring member.

Furthermore, preferably, the stop valve is provided with a seal member around the axis, on the first end side with respect to the valve body, a first exhaust passage communicating with a portion of the supply communication passage downstream of the valve seat, and a second exhaust passage communicating with atmosphere are connected to the valve hole, a first exhaust opening of the first exhaust passage provided in the valve hole is disposed on the second end side with respect to a second exhaust opening of the second exhaust passage provided in the valve hole, and, when the stop valve moves to the open position, the seal member moves to a position between the first exhaust opening and the second exhaust opening in the valve hole to shut off communication between the first and second exhaust passages, and, when the stop valve moves to the closed position, the seal member moves to a position on the second end side with respect to the first exhaust opening in the valve hole to allow communication between the first and second exhaust passages through the valve hole.

Furthermore, a stop valve module according to the present invention includes: a supply communication passage through which compressed air to be supplied to a fluid pressure device passes; an exhaust communication passage through which exhaust from the fluid pressure device passes; and a stop valve that opens and closes the supply communication passage. The stop valve module includes: a first end and a second end provided at both ends in a longitudinal direction; an upper end surface in which a plurality of upper openings are provided; a lower end surface in which a plurality of lower openings are provided; and a communication passage group including a plurality of communication passages through which the plurality of upper openings and the lower openings corresponding to the upper openings communicate. The communication passage group includes at least the supply communication passage and the exhaust communication passage. The supply communication passage includes: a first supply communication passage extending in the longitudinal direction and having an end on the second end side connected to a supply lower opening among the plurality of lower openings; and a second supply communication passage extending in the longitudinal direction and having an end on the second end side connected to a supply upper opening among the plurality of upper openings. Ends on the first end side of the first and second supply communication passages extend further toward the first end side than an outermost communication passage disposed on an extreme first end side in the communication passage group. The ends on the first end side of the first and second supply communication passages communicate with each other through a passage communication portion. The stop valve opens and closes the passage communication portion.

### Advantageous Effects of Invention

As described above, according to the present invention, it is possible to provide: a stop-valve-equipped solenoid valve assembly in which a stop valve is disposed between each of solenoid valves and a supply/exhaust base and in which decrease in the flow rate of compressed air can be suppressed as much as possible; and a stop valve module including the stop valve.

### Brief Description of Drawings

[Fig. 1] Fig. 1 is a perspective view of a stop-valve-equipped solenoid valve assembly according to one embodiment of the present invention.
[Fig. 2] Fig. 2 is a partial cross-sectional view of the stop-valve-equipped solenoid valve assembly taken along line II-II in Fig. 1.
[Fig. 3] Fig. 3 is an explanatory view showing the solenoid valve in Fig. 1 in symbolic form.
[Fig. 4] Fig. 4 is a perspective view of a stop valve module.
[Fig. 5] Fig. 5 is a plan view of the stop valve module.
[Fig. 6] Fig. 6 is a bottom view of the stop valve module.
[Fig. 7] Fig. 7 is a cross-sectional view of the stop valve module taken along line VII-VII in Fig. 5.
[Fig. 8] Fig. 8 is a cross-sectional view of the stop valve module taken along line VIII-VIII in Fig. 7.
[Fig. 9] Fig. 9 is a perspective cross-sectional view of the stop valve module taken along line IX-IX in Fig. 8.
[Fig. 10] Fig. 10 is a perspective view of a stop valve.
[Fig. 11] Fig. 11 is a cross-sectional view of a flow path opening/closing portion in a state in which the stop valve is in an open position.
[Fig. 12] Fig. 12 is a cross-sectional view of a flow path opening/closing portion in a state in which the stop valve is in a closed position.
[Fig. 13] Fig. 13 is a perspective view of a locking plate.
[Fig. 14] Fig. 14 is a perspective view relating to a modification of the stop-valve-equipped solenoid valve assembly.

### Description of Embodiments

Hereinbelow, a stop-valve-equipped solenoid valve assembly according to the present invention and a stop valve module used for the same will be described.

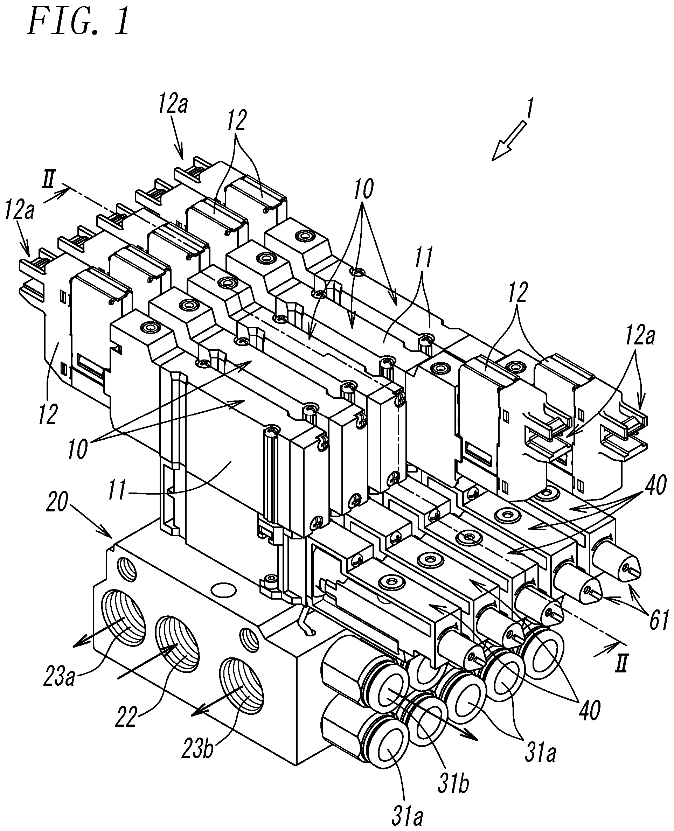

As shown in Fig. 1, a stop-valve-equipped solenoid valve assembly 1 is configured such that stop valve modules 40, which have stop valves 61 capable of individually shutting off air supply to a plurality of solenoid valves 10, are interposed between the plurality of solenoid valves 10 and a supply/exhaust base 20 that supplies and exhausts compressed air to and from the solenoid valves 10.

The stop-valve-equipped solenoid valve assembly 1 of the present embodiment will be described by taking as an example a non-plug-in type, in which electrical connections are made on the solenoid valve 10 side.

The supply/exhaust base 20 is formed in a rectangular parallelepiped shape, and has, inside thereof, a main supply passage 22 and first and second main exhaust passages 23a and 23b.

The supply/exhaust base 20 is formed in a rectangular shape extending in the width direction in front view, and in a rectangular shape extending in the depth direction in side view.

The front surface, upper surface, and side surfaces on both sides in the width direction of the supply/exhaust base 20 are formed as flat surfaces.

The main supply passage 22 extends between the side surfaces on both sides of the supply/exhaust base 20 in the width direction. In the depth direction, the first main exhaust passage 23a is formed as a through passage between the main supply passage 22 and a side surface on the far side, and the second main exhaust passage 23b is formed as a through passage between the main supply passage 22 and a side surface on the near side.

In other words, inside the supply/exhaust base 20, three penetrating passages, namely, the main supply passage 22 and the first and second main exhaust passages 23a and 23b, are formed parallel to each other, between the side surfaces.

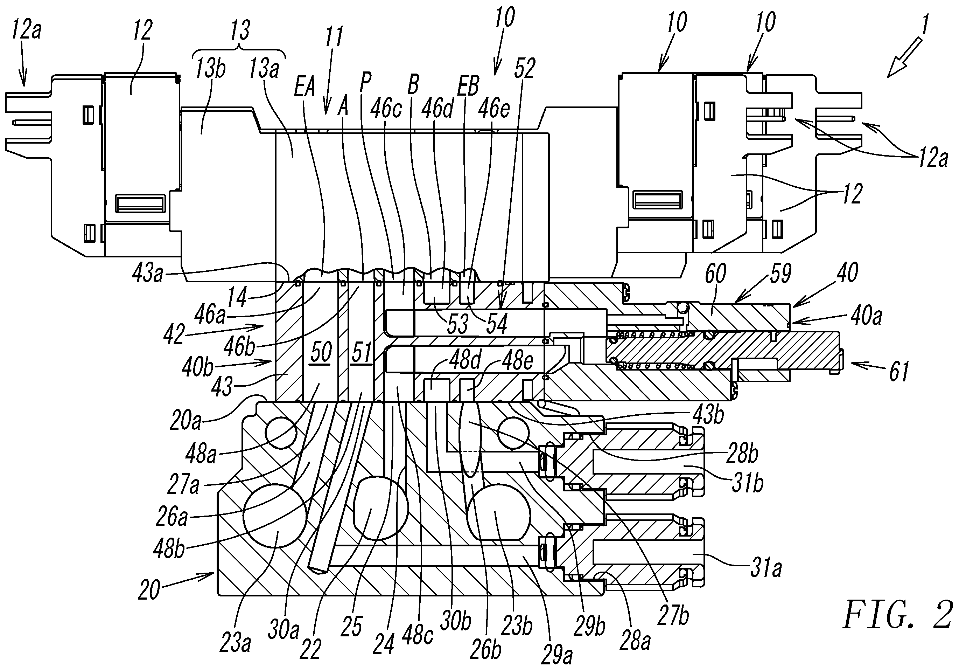

As shown in Fig. 2, the main supply passage 22 communicates, at the upper part thereof, with main air supply holes 24 extending upward. The main air supply holes 24 communicate with main air supply ports 25 provided in a mounting surface 20a of the supply/exhaust base 20.

In the present embodiment, the main supply passage 22 communicates with a plurality of main air supply holes 24 provided at predetermined intervals in the width direction, and each of the plurality of main air supply holes 24 communicates with a corresponding one of a plurality of main air supply ports 25 provided at predetermined intervals in the width direction in the mounting surface 20a of the supply/exhaust base 20.

The first and second main exhaust passages 23a and 23b communicate, at the upper parts thereof, with first and second main exhaust holes 26a and 26b extending upward. The first and second main exhaust holes 26a and 26b communicate with first and second main exhaust ports 27a and 27b provided in the mounting surface 20a of the supply/exhaust base 20.

In the present embodiment, the first main exhaust passage 23a communicates with a plurality of first main exhaust holes 26a, equal in number to the main air supply holes 24, provided at predetermined intervals in the width direction. A plurality of first main exhaust ports 27a are provided in the mounting surface 20a of the supply/exhaust base 20, at predetermined intervals equal to those of the main air supply ports 25 in the width direction.

Each of the plurality of first main exhaust holes 26a communicates with a corresponding one of the plurality of first main exhaust ports 27a.

Furthermore, the second main exhaust passage 23b communicates with a plurality of second main exhaust holes 26b, equal in number to the main air supply holes 24, provided at predetermined intervals in the width direction. A plurality of second main exhaust ports 27b are provided in the mounting surface 20a of the supply/exhaust base 20 at predetermined intervals equal to those of the main air supply ports 25 in the width direction.

Each of the plurality of second main exhaust holes 26b communicates with a corresponding one of the plurality of second main exhaust ports 27b.

In an end surface on the front side of the supply/exhaust base 20, a plurality of first and second output ports 28a and 28b are provided in equal number to and at the same intervals as the main air supply holes 24 in the width direction. One end of a first output hole 29a communicates with each of the first output ports 28a, and the other end of the first output hole 29a communicates with a corresponding one of a plurality of first main output ports 30a provided in the mounting surface 20a of the supply/exhaust base 20 in equal number to and at the same intervals as the main air supply holes 24 in the width direction.

Furthermore, one end of a second output hole 29b communicates with each of the second output ports 28b, and the other end of the second output hole 29b communicates with a corresponding one of a plurality of second main output ports 30b provided in the mounting surface 20a in equal number to and at the same intervals as the main air supply holes 24 in the width direction.

First and second pipe joints 31a and 31b are fitted to the first and second output ports 28a and 28b, respectively.

In the present embodiment, a compressed-air supply source is connected to the main supply passage 22, the first and second main exhaust passages 23a and 23b are open to the atmosphere, and a fluid pressure device is connected to the first and second pipe joints 31a and 31b.

Next, the solenoid valves 10 will be described.

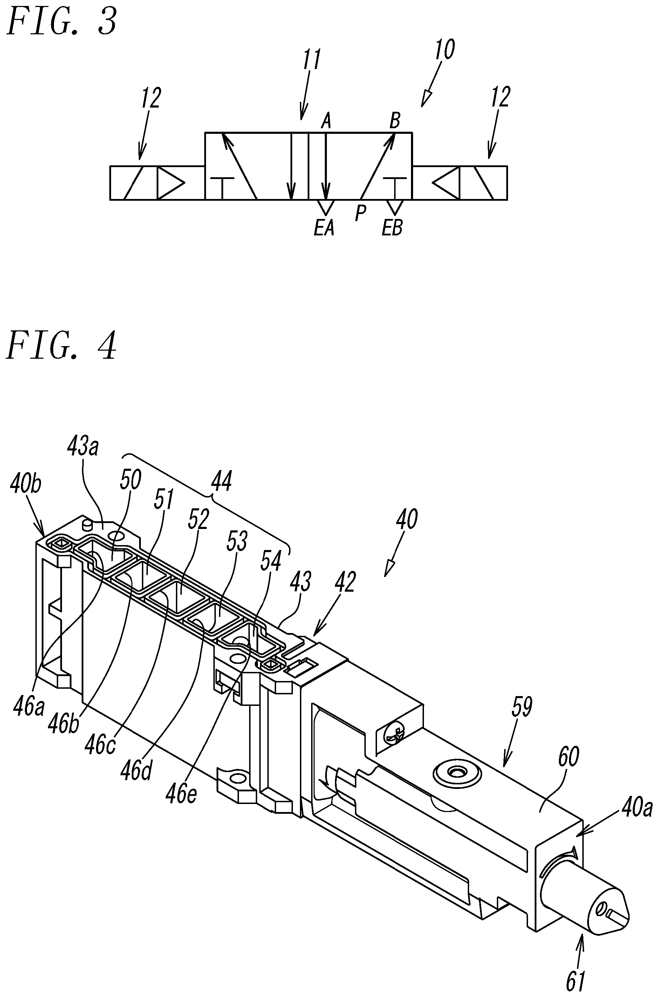

As shown in Figs. 2 and 3, each solenoid valve 10 includes a main valve portion 11 having a valve mechanism that switches between passages through which compressed air flows, and an electromagnetic operating portion 12 that drives the valve mechanism.

The stop-valve-equipped solenoid valve assembly 1 of the present embodiment is used in a state in which a plurality of solenoid valves 10 are assembled side by side in the width direction.

Here, as shown in Fig. 1, the plurality of solenoid valves 10 may include both single-type valves, each having one electromagnetic operating portion 12, and double-type valves, each having two electromagnetic operating portions 12.

Because the structure of the solenoid valve 10 is known, only the main structure and operation thereof will be briefly described here.

As shown in Fig. 3, the solenoid valve 10 of the present embodiment is a pilot-operated 5-port 2-position solenoid valve, and the main valve portion 11 of the solenoid valve 10 has a valve body 13 accommodating a valve mechanism.

The valve body 13 is formed in a rectangular parallelepiped shape extending in the depth direction, and is formed by combining a first block 13a accommodating a main valve and a second block 13b accommodating a piston for operating the main valve.

The side surfaces on both sides in the width direction of the valve body 13 are formed as flat surfaces extending parallel to each other in the vertical direction, and the lower surface of the valve body 13 is formed as a flat surface orthogonal to the side surfaces.

On a lower surface of the first block 13a of the valve body 13, a mounting surface 14 via which the valve body 13 is mounted on an upper end surface 43a of the stop valve module 40 is formed.

The mounting surface 14 is provided with, in order from the far side toward the near side, a first exhaust port EA, a first output port A, a supply port P, a second output port B, and a second exhaust port EB. The communication states of these ports EA, A, P, B, and EB are switched by the operation of the valve mechanism operated by the electromagnetic operating portion 12.

As shown in Fig. 3, the electromagnetic operating portion 12 is a solenoid-operated pilot valve, and supplies pilot air for operating the main valve to a piston of the main valve portion 11.

The electromagnetic operating portion 12 is provided with a connector 12a for receiving power supply or an electrical signal transmitted from a controller (not shown) or for transmitting an electrical signal from the electromagnetic operating portion 12 to the controller.

In the present embodiment, the connectors 12a include those disposed on the far side of the valve body 13 and those disposed on both sides of the valve body 13 in the depth direction (see Fig. 1).

The thus-configured solenoid valve 10 is detachably mounted on the stop valve module 40 with fastening means, such as bolts, in a state in which the mounting surface 14 thereof is in contact with the upper end surface 43a of the stop valve module 40.

Next, the stop valve modules 40 will be described.

As shown in Figs. 2 and 4 to 10, each stop valve module 40 is formed in a rectangular parallelepiped shape extending in the depth direction.

The stop valve module 40 includes a first end 40a and a second end 40b provided at ends in the longitudinal direction, a passage forming portion 42 in which a communication passage group 44 including a plurality of connection passages 50 to 54 is formed, and a passage opening/closing portion 59 provided with the stop valve 61 capable of shutting off the air supply to the solenoid valve 10.

The passage forming portion 42 and the passage opening/closing portion 59 respectively include a passage forming body 43 and a passage opening/closing body 60, which are respective bodies.

Each of these bodies 43 and 60 is formed in a rectangular parallelepiped shape extending in the longitudinal direction, and these bodies 43 and 60 are integrally connected to each other in a state in which an end surface on the first end 40a side of the passage forming body 43 is in contact with an end surface on the second end 40b side of the passage opening/closing body 60.

The upper end surface 43a and a lower end surface 43b of the passage forming body 43 are formed as rectangular flat surfaces extending in the longitudinal direction and parallel to each other.

The upper end surface 43a has a plurality of upper openings (upper ports) 46a to 46e provided parallel to each other in a row from the second end 40b side toward the first end 40a side.

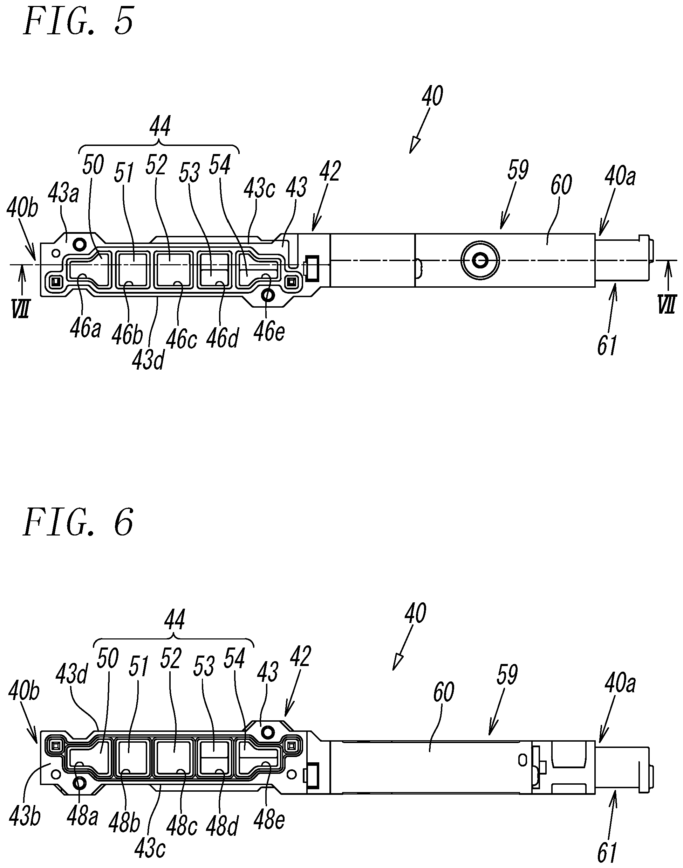

Specifically, an upper first exhaust port 46a, an upper first output port 46b, an upper supply port 46c, an upper second output port 46d, and an upper second exhaust port 46e are provided parallel to each other (see Fig. 5).

The lower end surface 43b has a plurality of lower openings (lower ports) 48a to 48e provided parallel to each other in a row from the second end 40b side toward the first end 40a side.

Specifically, a lower first exhaust port 48a, a lower first output port 48b, a lower supply port 48c, a lower second output port 48d, and a lower second exhaust port 48e are provided parallel to each other (see Fig. 6).

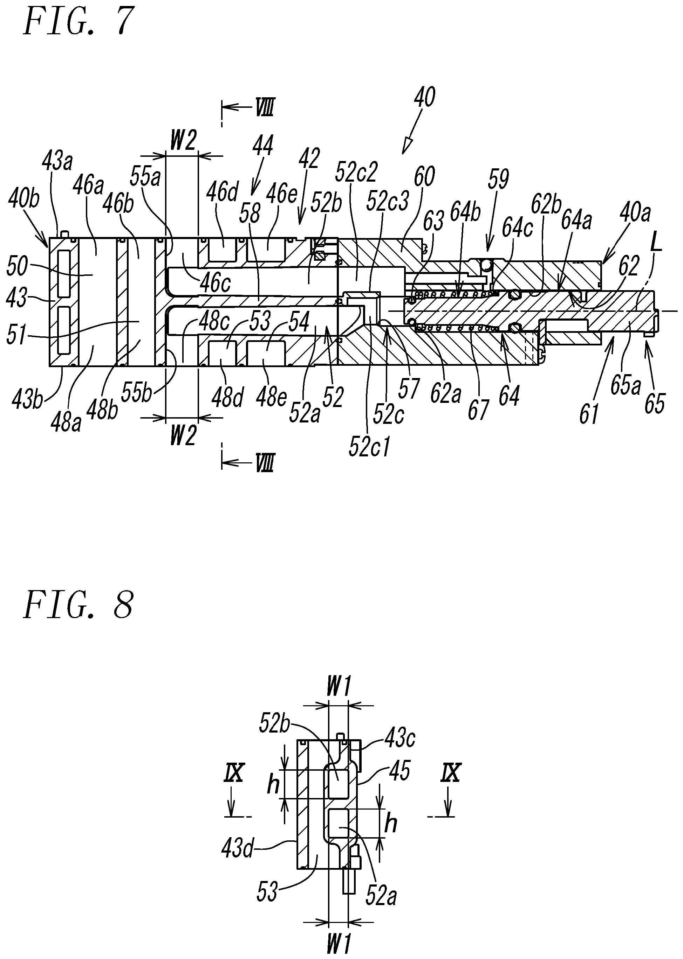

Inside the passage forming body 43, the communication passage group 44, which includes the plurality of communication passages 50 to 54 that allow communication between the plurality of ports 46a to 46e provided in the upper end surface 43a and the plurality of ports 48a to 48e, corresponding to the ports 46a to 46e, provided in the lower end surface 43b is formed (see Fig. 7).

The ports 46a, 46b, 46c, 46d, and 46e provided in the upper end surface 43a are connected to the corresponding ports EA, A, PB, and EB (see Fig. 2) provided in the mounting surface 14 of the solenoid valve 10.

The ports 48a, 48b, 48c, 48d, and 48e provided in the lower end surface 43b are connected to the corresponding ports 27a, 30a, 25, 30b, and 27b (see Fig. 2) provided in the mounting surface 20a of the supply/exhaust base 20.

In the present embodiment, as shown in Figs. 5 and 6, the ports 46a to 46e and 48a to 48e provided in the upper end surface 43a and the lower end surface 43b are disposed close to each other in the longitudinal direction and are disposed close to a first side surface 43c and a second side surface 43d, which face away from each other at both ends in the width direction of the passage forming body 43.

Furthermore, the upper and lower first exhaust ports 46a and 48a are T-shaped openings that are narrow on the second end 40b side, and the upper and lower second exhaust ports 46e and 48e are T-shaped openings that are narrow on the first end 40a side.

Furthermore, each of the upper and lower first output ports 46b and 48b, the upper and lower supply ports 46c and 48c, and the upper and lower second output ports 46d and 48d is a square opening.

Next, the communication passage group 44 will be described.

As shown in Fig. 7, the communication passage group 44 includes: the first exhaust communication passage (exhaust communication passage) 50 that connects the upper and lower first exhaust ports 46a and 48a to each other and communicates with the first main exhaust passage 23a; the first output communication passage 51 that connects the upper and lower first output ports 46b and 48b to each other; the supply communication passage 52 that connects the upper and lower supply ports 46c and 48c (supply upper opening and supply lower opening) to each other and communicates with the main supply passage 22; the second output communication passage 53 that connects the upper and lower second output ports 46d and 48d to each other; and the first exhaust communication passage (exhaust communication passage) 54 that connects the upper and lower second exhaust ports 46e and 48e to each other and communicates with the second main exhaust passage 23a.

Specifically, the communication passage group 44 includes five communication passages 50 to 54, which include the first and second exhaust communication passages 50 and 54, the first and second output communication passages 51 and 53, and the supply communication passage 52.

Here, in the communication passage group 44, the plurality of communication passages 50, 51, 53, and 54, excluding the supply communication passage 52, extend in the vertical direction between the upper end surface 43a and the lower end surface 43b.

In the present embodiment, the first exhaust communication passage 50 has the same cross-sectional shape (T-shape) as that of the upper and lower first exhaust ports 46a and 48a and extends linearly in the vertical direction.

The first output communication passage 51 also has the same cross-sectional shape (square) as that of the upper and lower first output ports 46b and 48b and extends linearly in the vertical direction.

Among the plurality of communication passages 50 to 54, the second output communication passage 53 and the second exhaust communication passage 54, which are disposed on the first end 40a side with respect to the upper and lower supply ports 46c and 48c, intersect the supply communication passage 52 (first and second supply communication passages 52a and 52b) in a state in which the supply communication passage 52 is disposed on the first side surface 43c side in side view of the stop valve module 40 as viewed in the transverse direction.

Hence, the cross-sectional shapes at the ends of the second output communication passage 53 in the vertical direction are the same square shapes as the shapes of the upper and lower second output ports 46d and 48d.

However, as shown in Fig. 8, because the supply communication passage 52 (first and second supply communication passages 52a and 52b) is disposed parallel to a part of the second output communication passage 53 in the width direction (transverse direction), the cross-sectional shape of an intermediate portion of the second output communication passage 53 in the vertical direction is a rectangular shape having a smaller width than the openings of the upper and lower second output ports 46d and 48d.

The cross-sectional shapes at the ends of the second exhaust communication passage 54 in the vertical direction are also the same square shapes as the shapes of the upper and lower second exhaust ports 46e and 48e, similarly to the second output communication passage 53.

However, because the supply communication passage 52 (first and second supply communication passages 52a and 52b) is also disposed parallel to a part of the second exhaust communication passage 54 in the width direction (transverse direction), the cross-sectional shape of an intermediate portion of the second exhaust communication passage 54 in the vertical direction is a rectangular shape having a smaller width than the openings of the upper and lower second exhaust ports 46e and 48e.

Next, the supply communication passage 52 will be described.

As shown in Figs. 7 to 9, the supply communication passage 52 includes the first supply communication passage 52a, which extends in the longitudinal direction and is connected to the lower supply port 48c (supply lower opening) at the end on the second end 40b side, and the second supply communication passage 52b, which extends in the longitudinal direction and is connected to the upper supply port 46c (supply upper opening) at the end on the second end 40b side.

The ends on the first end 40a side of the first and second supply communication passages 52a and 52b extend further toward the first end 40a than the second exhaust communication passage 54 (the outermost communication passage), which is located on the extreme first end 40a side in the communication passage group 44.

The ends on the first end 40a side of the first and second supply communication passages 52a and 52b communicate with each other through a passage communication portion 52c described below.

The first and second supply communication passages 52a and 52b are disposed parallel to each other in the longitudinal direction, near the first side surface 43c of the passage forming portion 42 of the stop valve module 40 and at an intermediate portion of the first side surface 43c in the vertical direction.

A bulging portion 45 projecting outward in the transverse direction and extending in the longitudinal direction is formed on the first side surface 43c, and the first and second supply communication passages 52a and 52b are disposed inside the bulging portion 45.

In other words, because the first and second supply communication passages 52a and 52b are disposed near the first side surface 43c of the passage forming body 43, the bulging portion 45 is formed on the first side surface 43c.

The first and second supply communication passages 52a and 52b are formed to have rectangular cross-sectional shapes extending in the vertical direction (see Fig. 8).

In the present embodiment, the height h of the cross section of the first and second supply communication passages 52a and 52b in the vertical direction is approximately the same as the width w2 of one side of the upper and lower supply ports 46c and 48c, whereas the width w1 of the cross section of the first and second supply communication passages 52a and 52b is smaller than the width w2 of one side of the supply ports 46c and 48c.

Thus, the flow-passage cross sections of the first and second supply communication passages 52a and 52b are narrower than the openings of the upper and lower supply ports 46c and 48c.

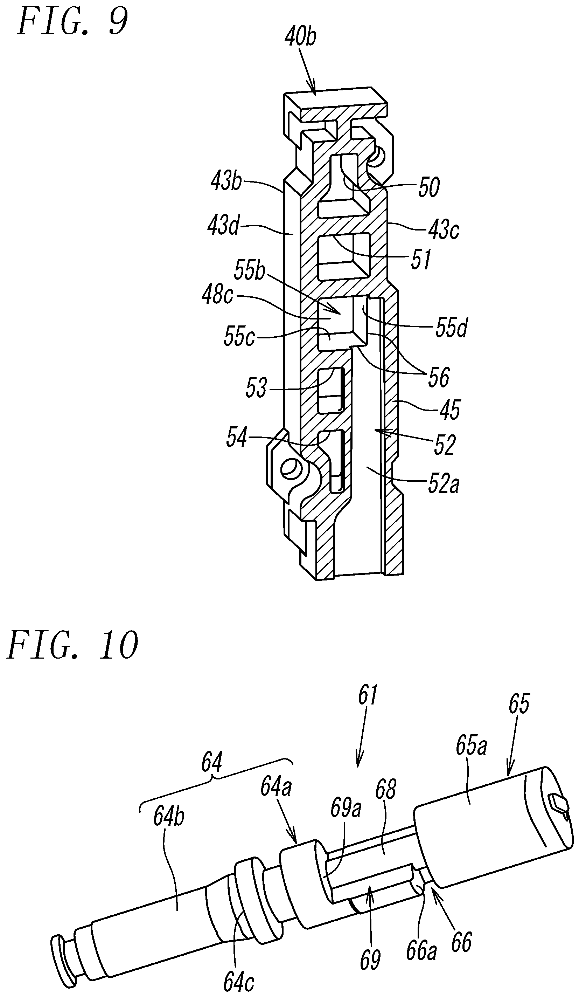

As shown in Figs. 7 and 9, a first communication portion 55a and a second communication portion 55b extending inward of the passage forming portion 42 are connected to the upper and lower supply ports 46c and 48c, respectively, in the vertical direction.

In the present embodiment, the cross-sectional shapes of the first and second communication portions 55a and 55b are the same square shapes as the shapes of the upper and lower supply ports 46c and 48c.

To the bottoms of the first and second communication portions 55a and 55b, the ends on the second end 40b side of the first and second supply communication passages 52a and 52b are connected, respectively, across side surfaces 55c on the first end 40a side and bottom surfaces 55d.

In this manner, in the present embodiment, communication openings 56 are open across the side surfaces 55c and the bottom surfaces 55d, and the ends on the second end 40b side of the first and second supply communication passages 52a and 52b communicate with the lower and upper supply ports 48c and 46c, respectively, through the communication openings 56.

Hence, the degree by which the air flowing through the communication opening 56 into the first and second supply communication passages 52a and 52b is throttled is suppressed as much as possible.

As shown in Fig. 8, because the first and second supply communication passages 52a and 52b are disposed near the first side surface 43c, the flow-passage cross section of the second output communication passage 53 is narrowed by the first and second supply communication passages 52a and 52b.

However, because the supply communication passages 52a and 52b are disposed inside the bulging portion 45, the region where the first output communication passage 53 is narrowed by the supply communication passages 52a and 53a is reduced as much as possible.

Next, the passage opening/closing portion 59 will be described.

The passage opening/closing portion 59 has an axis L extending in the depth direction, that is, in the longitudinal direction.

As shown in Figs. 7 and 8, the passage opening/closing body 60 includes the passage communication portion 52c, a valve hole 62 extending along the axis L on the first end 40a side with respect to the passage communication portion 52c, and the stop valve 61 having a valve body 63 provided at the end on the second end 40b side and accommodated in the valve hole 62 so as to be slidable along the axis L.

The end on the second end 40b side of the valve hole 62 is open at the end on the first end 40a side of the passage communication portion 52c, and the end on the first end 40a side of the valve hole 62 is open in the end surface on the first end 40a side of the passage opening/closing body 60.

The passage communication portion 52c includes a first passage communication portion 52c1 and a second passage communication portion 52c2 extending along the axis L and disposed parallel to each other in the vertical direction. The end on the second end 40b side of the first passage communication portion 52c1 is open to the end surface on the second end 40b side of the passage opening/closing body 60 and is connected to the first supply communication passage 52a.

The second passage communication portion 52c2 is disposed above the first passage communication portion 52c1, and the end on the second end 40b side thereof is open to the end surface of the passage opening/closing body 60 and is connected to the second supply communication passage 52b.

Between the first and second passage communication portions 52c1 and 52c2, a communication partition portion 52c3 that partitions the passage communication portions 52c1 and 52c2 from each other is formed.

The communication partition portion 52c3 is connected to the end on the first end 40a side of a supply partition portion 58 that partitions the first and second supply communication passages 52a and 52b from each other. The end on the first end 40a side of the communication partition portion 52c3 is positioned closer to the second end 40b than is the end on the first end 40a side of the passage communication portion 52c.

At the end on the first end 40a side of the communication partition portion 52c3, a valve seat 57 that is disposed on the axis L and with which the valve body 63 can be brought into and out of contact in accordance with reciprocation of the stop valve 61 is provided.

In the present embodiment, the valve seat 57 is formed in an annular shape.

As shown in Figs. 7 and 10, the stop valve 61 includes a valve main body portion 64 formed in a shaft shape and an operating portion 65 formed at the end on the first end 40a side of the stop valve 61.

The valve main body portion 64 and the operating portion 65 are formed integrally.

The operating portion 65 has an operating shaft 65a extending in the direction of the axis L, and the operating shaft 65a is rotatably inserted into an operating hole 62b connected to the valve hole 62.

In the present embodiment, the portion on the first end 40a side of the valve hole 62 is formed as the operating hole 62b.

By operating the operating shaft 65a, the stop valve 61 can be reciprocated in the direction of the axis L of the valve hole 62 between a closed position P2, at which the supply communication passage 52 is closed, and an open position P1, at which the supply communication passage 52 is open.

In the present embodiment, by moving the operating portion 65 in the direction of the axis L, the stop valve 61 can be reciprocated between the open position P1 and the closed position P2.

The valve main body portion 64 of the stop valve 61 includes a large-diameter shaft portion 64a slidably fitted in the valve hole 62 and a small-diameter shaft portion 64b extending from the end on the second end 40b side of the large-diameter shaft portion 64a and having a smaller diameter than the large-diameter shaft portion 64a.

The large-diameter shaft portion 64a and the small-diameter shaft portion 64b are disposed coaxially.

An annular shaft-side stepped portion 64c is formed between the large-diameter shaft portion 64a and the small-diameter shaft portion 64b, and a valve-hole-side stepped portion 62a extending toward the axis L of the valve hole 62 is formed at the end on the second end 40b side of the valve hole 62.

A compression spring 67 (spring member) that is in contact with the shaft-side stepped portion 64c and the valve-hole-side stepped portion 62a and urges the stop valve 61 toward the first end 40a side is provided around the small-diameter shaft portion 64b.

The valve body 63, which has an annular shape and which can be brought into and out of contact with the valve seat 57, is fitted to the end on the second end 40b side of the small-diameter shaft portion 64b.

Accordingly, in the passage connection portion 52c, as the stop valve 61 moves in the direction of the axis L, the valve body 63 can be brought into and out of contact with the valve seat 57.

The passage opening/closing body 60 further includes a locking mechanism 70 that forms a locking position P3 at which movement of the stop valve 61 in the direction of the axis L is prevented at the closed position P2, and a non-locking position P4 at which movement of the stop valve in the axial direction is allowed.

As shown in Figs. 10 to 13, the locking mechanism 70 includes an engagement groove portion 66 (engaging portion) provided in the operating portion 65 and a locking plate 71 (engaged portion) provided in the operating hole 62b.

Before the locking mechanism 70 is described, the surrounding structure of the locking mechanism 70 will be described.

The large-diameter shaft portion 64a, which is on the second end 40b side of the operating portion 65, is provided with a cutout portion 69 extending in the direction of the axis L and having a semicircular cutout in a cross-sectional view as the stop valve 61 is viewed from the first end 40a side.

At the bottom of the cutout portion 69, a protruding ridge portion 68 having a diameter smaller than the outer diameter of the large-diameter shaft portion 64a, protruding in a semicircular shape around the axis L, and extending in the direction of the axis L (longitudinal direction) is formed. A pair of flat portions 74a and 74b extending in the radial direction of the large-diameter shaft portion 64a are formed on both ends of the protruding ridge portion 68 in the transverse direction.

At the end on the first end 40a side of the flat portion 74a, which is one of the flat portions 74a and 74b, an engagement groove portion 66, which is formed as a cutout extending downward from the flat portion 74a and having an angular extent of about 90° about the axis L of the protruding ridge portion 68, is formed.

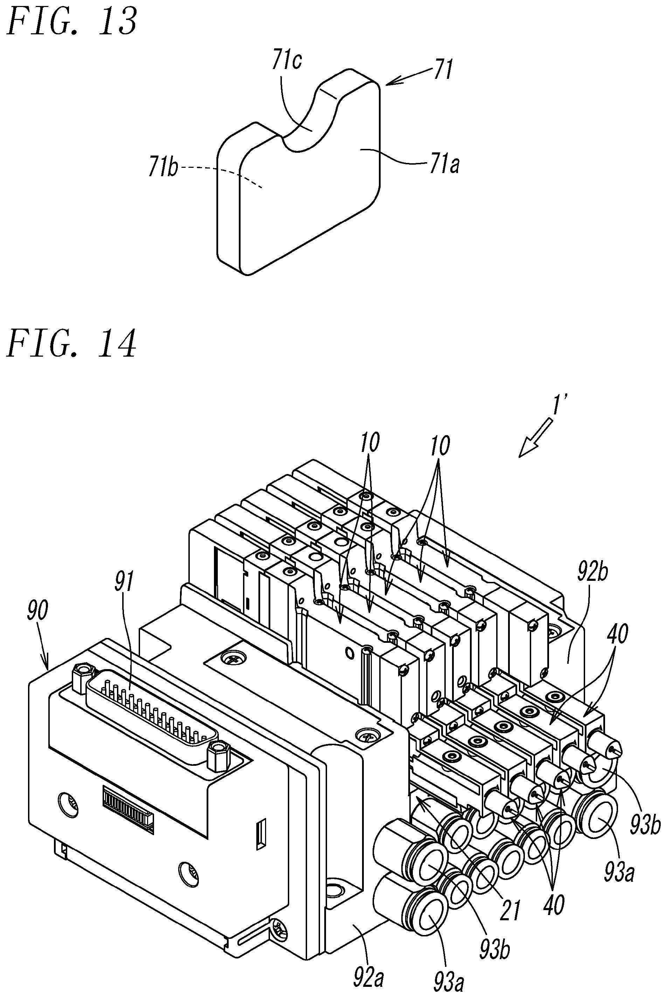

As shown in Fig. 13, the locking plate 71 is formed in a plate shape having a pair of side surfaces 71a and 71b facing away from each other and having a width slightly smaller than the width of the engagement groove portion 66.

A semicircular recess 71c is formed in an upper surface of the locking plate 71.

The recess 71c is formed so as to conform to the outer surface of the semicircular protruding ridge portion 68 described above.

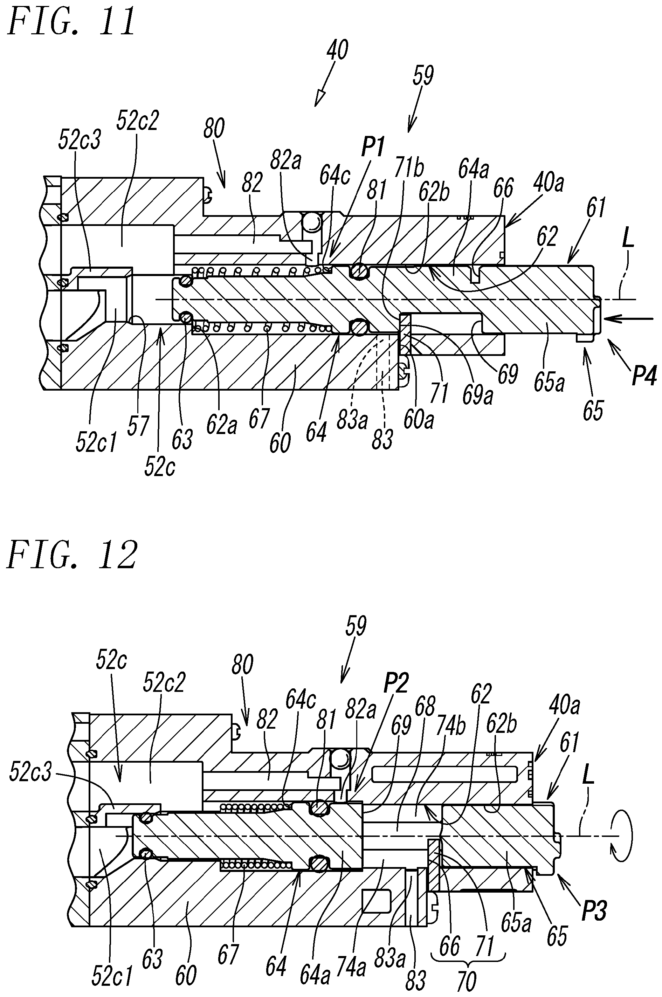

The locking plate 71 is fitted to a mounting recess 60a provided at a lower part on the first end 40a side of the operating hole 62b in an orientation in which the recess 71c faces upward (see Fig. 11).

The stop valve 61 is inserted into the valve hole 62 in an orientation in which the protruding ridge portion 68 faces downward, so that the protruding ridge portion 68 engages with the recess 71c of the locking plate 71.

In a state in which the stop valve 61 has been moved to the open position P1 (see Fig. 11), when the end surface 69a on the second end 40b side of the cutout portion 69 comes into contact with the side surface 71b on the second end 40b side of the locking plate 71, the stop valve 61 is held at the open position P1 (non-locking position P4).

Meanwhile, as shown in Fig. 12, in a state in which the stop valve 61 has been moved to the closed position P2, when the operating shaft 65a is rotated clockwise as the stop valve 61 is viewed from the first end 40a side, the locking plate 71 is inserted into the engagement groove portion 66.

Then, when the operation of the operating shaft 65a is released, an end surface 66a (see Fig. 10) on the first end 40a side of the engagement groove portion 66 comes into contact with the side surface 71b on the second end side of the locking plate 71 due to the urging force of the compression spring 67.

Specifically, the rotation of the operating shaft 65a achieves switching to the locking position P3, in which the engagement groove portion 66 and the locking plate 71 are engaged.

Hence, the movement of the stop valve 61 toward the first end 40a side is prevented, and the stop valve 61 is locked at the closed position P2.

When the operating shaft 65a that has been switched to the locking position P3 is rotated and the locking plate 71 is removed from the engagement groove portion 66, the operating shaft 65a is switched to the non-locking position P4, at which engagement between the engagement groove portion 66 and the locking plate 71 is released.

Then, when the operation of the operating shaft 65a is released, the stop valve 61 is moved from the closed position P2 to the open position P1 by the urging force of the compression spring 67.

As shown in Figs. 2 and 12, in the stop-valve-equipped solenoid valve assembly 1 of the present embodiment, the air supply to the plurality of solenoid valves 10 can be individually shut off by the stop valve modules 40.

Hence, when any of the solenoid valves 10 fails, the solenoid valve 10 can be replaced by removing the solenoid valve 10 from the stop valve module 40 while the air supply to the failed solenoid valve 10 is shut off.

At this time, when the solenoid valve 10 is removed, compressed air remaining in the supply communication passage 52 downstream of the valve seat 57 is discharged from the upper supply port 46c of the stop valve module 40.

Hence, the stop valve module 40 of the present embodiment is provided with a residual pressure exhaust mechanism 80 for preventing compressed air from being discharged when the solenoid valve 10 is removed from the module 40.

As shown in Fig. 12, the residual pressure exhaust mechanism 80 includes: a seal member 81 fitted to the stop valve 61, on the first end 40a side with respect to the valve body 63; a first exhaust passage 82 leading to a portion of the supply communication passage 52 downstream of the valve seat 57; and a second exhaust passage 83 through which the valve hole 62 communicates with the atmosphere.

In the present embodiment, the seal member 81 is fitted around the axis L, on the second end 40b side of the large-diameter shaft portion 64a of the stop valve module 40.

The first exhaust passage 82 is connected to the second passage communication portion 52c2 of the passage communication portion 52c.

The first exhaust passage 82 is formed so as to extend from the second passage communication portion 52c2 disposed at the upper part of the passage communication portion 52c, through the inside of the stop valve module 40 (inside the passage opening/closing body 60), to the valve hole 62. The second exhaust passage 83 is formed so as to extend from the lower end of the stop valve module 40 (lower end of the passage opening/closing body 60), through the inside of the stop valve module 40 (inside the passage opening/closing body 60), to the valve hole 62, on the first end 40a side with respect to the first exhaust passage 82.

A first exhaust opening 82a of the first exhaust passage 82, formed in the valve hole 62, is located on the second end 40b side with respect to a second exhaust opening 83a of the second exhaust passage 83, formed in the valve hole 62.

When the stop valve 61 moves to the open position P1, the seal member 81 moves to a position between the first exhaust opening 82a and the second exhaust opening 83a in the direction of the axis L of the valve hole 62.

When the stop valve 61 moves to the closed position P2, the seal member 81 moves to a position on the second end 40b side with respect to the first exhaust opening 82a in the direction of the axis L of the valve hole 62.

Accordingly, in a state in which the stop valve 61 is located at the closed position P2, the first and second exhaust passages 82 and 83 communicate with each other through the gap between the valve hole 62 and the stop valve 61. Thus, the compressed air remaining downstream of the valve seat 57 in the supply communication passage 52 can be discharged to the outside.

Next, the operation of the stop-valve-equipped solenoid valve assembly 1 will be described.

As shown in Figs. 1 and 2, in a state in which the stop valve 61 is located at the open position P1, when compressed air is supplied to the main supply passage 22 of the supply/exhaust base 20, the compressed air is supplied to each of the plurality of stop valve modules 40.

Then, when the plurality of solenoid valves 10 are individually operated, the communication state between the first or second output port 28a or 28b corresponding to each solenoid valve 10, the main supply passage 22, and the first or second main exhaust passage 23a or 23b is switched, allowing compressed air to be output from the first or second output port 28a or 28b corresponding to each solenoid valve 10 or to be exhausted from the first or second main exhaust passage 23a or 23b.

Specifically, compressed air supplied from the main supply passage 22 of the supply/exhaust base 20 to the stop valve module 40 is supplied to the solenoid valve 10 through the supply communication passage 52.

Then, in accordance with the operation of the solenoid valve 10, compressed air is supplied from the first output port A or the second output port B of the solenoid valve 10 to the first or second output communication passage 51 or 53 of the stop valve module 40.

Here, when compressed air is supplied to the second output communication passage 53, because the decrease in the flow rate of the compressed air flowing through the output communication passage is suppressed, the decrease in the flow rate of the compressed air supplied from the second output port 28b of the supply/exhaust base 20 through the output communication passage to the fluid pressure device can be suppressed as much as possible.

In addition, when the exhaust flowing into the second output port 28b is discharged through the solenoid valve 10 and the second output passage 53 and the second exhaust communication passage 54 of the stop valve module 40, because the decrease in the flow rate of the compressed air flowing through the second exhaust communication passage 54 is also suppressed as in the second output communication passage 53, the decrease in the flow rate of the exhaust discharged to the second main exhaust passage 23b through the second exhaust communication passage 54 can be suppressed as much as possible.

Next, a method for replacing a solenoid valve 10 in the case where one solenoid valve 10 of a plurality of solenoid valves 10 fails while compressed air is being supplied from the supply/exhaust base 20 to the plurality of solenoid valves 10 will be described.

In this case, as shown in Figs. 11 and 12, an operation toward the second end 40b side in the direction of the axis L is performed on the operating shaft 65a of the stop valve module 40 connected to the failed solenoid valve 10 to move the stop valve 61 to the closed position P2.

Then, the operating shaft 65a is rotated around the axis L from the non-locking position P4 to the locking position P3 to lock the stop valve 61 at the closed position P2 with the locking mechanism 70.

Accordingly, the passage communication portion 52c is shut off to stop the air supply to the failed solenoid valve 10, and the compressed air remaining in a portion downstream of the valve seat 57 in the supply communication passage 52 is exhausted to the outside through the first exhaust passage 82 and the second exhaust passage 83 of the residual pressure exhaust mechanism 80 in the stop valve module 40, as described above.

Then, the screw connecting the failed solenoid valve 10 and the stop valve module 40 is removed, and the failed solenoid valve 10 is detached from the stop valve module 40.

By attaching a non-failed solenoid valve 10 to the stop valve module 40 with a screw, the task of replacing the failed solenoid valve 10 is completed.

In this way, when a solenoid valve 10 fails, it is possible to replace the failed solenoid valve 10 while continuing the air supply to the other solenoid valves 10.

Furthermore, when the failed solenoid valve 10 is removed from the stop valve module 40, because the compressed air remaining in the module 40 is not discharged from the upper supply port 46c of the stop valve module 40, the task of replacing the failed solenoid valve 10 can be smoothly performed.

Although the above-described stop-valve-equipped solenoid valve assembly 1 has been described by taking as an example a non-plug-in type, in which electrical connections are made on the solenoid valve 10 side, the invention is not limited thereto.

As shown in Fig. 14, a stop-valve-equipped solenoid valve assembly 1' may be of a plug-in type, in which electrical connections are made to a connector 91 of an end block 90 mounted on one end in the width direction.

The plug-in type stop-valve-equipped solenoid valve assembly 1' is configured such that stop valve modules 40 are interposed between a plurality of solenoid valves 10 and a supply/exhaust base 21 to connect them to each other, first and second port blocks 92a and 92b are connected to ends in the width direction of the supply/exhaust base 21, and the end block 90 is connected to one side surface of the first port block 92a.

The first and second port blocks 92a and 92b are each provided with a main supply port 93a communicating with the main supply passage 22 of the supply/exhaust base 21 and a main exhaust port 93b communicating with the first and second main exhaust passages 23a and 23b.

The end block 90 supplies, via the connector 91 provided on the upper surface thereof, power and electrical signals to the electromagnetic operating portion 12 provided for each of the plurality of solenoid valves 10.

Furthermore, in the above-described embodiment, the operating portion 65 of the stop valve 61 has been described as being formed coaxially and integrally with the valve main body portion 64 on the same axis L, but the invention is not limited thereto.

The operating portion 65 may be provided separately from the valve main body portion 64 and connected thereto so as to interlock with each other, and may be movable in the vertical direction with respect to the upper end surface of the passage opening/closing portion 59.

Then, by moving the operating portion 65 downward, the valve main body portion 64 may be moved toward the second end 40b side, and by releasing the downward operation of the operating portion 65 and moving the operating portion 65 upward, the valve main body portion 64 may be moved toward the first end 40a side.

### Reference Signs List

- 1, 1': stop-valve-equipped solenoid valve assembly
- 10: solenoid valve
- 20: supply/exhaust base
- 22: main supply passage
- 23a: first main exhaust passage (main exhaust passage)
- 23b: second main exhaust passage (main exhaust passage)
- 28a: first output port
- 28b: second output port
- 40: stop valve module
- 40a: first end
- 40b: second end
- 43a: upper end surface
- 43b: lower end surface
- 43c: first side surface (side surface)
- 43d: second side surface (side surface)
- 44: communication passage group
- 45: bulging portion
- 46a: upper first exhaust port (upper opening)
- 46b: upper first output port (upper opening)
- 46c: upper supply port (upper opening)
- 46d: upper second output port (upper opening)
- 46e: upper second exhaust port (upper opening)
- 48a: lower first exhaust port (lower opening)
- 48b: lower first output port (lower opening)
- 48c: lower supply port (lower opening)
- 48d: lower second output port (lower opening)
- 48e: lower second exhaust port (lower opening)
- 50: first exhaust communication passage (communication passage, exhaust communication passage)
- 51: first output communication passage (communication passage)
- 52: supply communication passage (communication passage)
- 52a: first supply communication passage
- 52b: second supply communication passage
- 52c: passage communication portion
- 53: second output communication passage (communication passage, output communication passage)
- 54: second exhaust communication passage (communication passage, exhaust communication passage, outermost communication passage)
- 55c: side surface
- 55d: bottom surface
- 57: valve seat
- 61: stop valve
- 62: valve hole
- 62b: operating hole
- 63: valve body
- 65a: operating shaft
- 66: engagement groove portion (engaging portion)
- 67: compression spring (spring member)
- 70: locking mechanism
- 71: locking plate (engaged portion)
- 81: seal member
- 82: first exhaust passage
- 82a: first exhaust opening
- 83: second exhaust passage
- 83a: second exhaust opening
- L: axis
- P1: open position
- P2: closed position
- P3: locking position
- P4: non-locking position

## Claims

1. A stop-valve-equipped solenoid valve assembly comprising: a plurality of solenoid valves; a supply/exhaust base in which a main supply passage and a main exhaust passage are formed; and output ports provided corresponding to the plurality of solenoid valves, communication states between the output ports, the main supply passage, and the main exhaust passage being switched by individually operating the plurality of solenoid valves, wherein
the solenoid valve assembly is configured by disposing, between each of the plurality of solenoid valves and the supply/exhaust base, a stop valve module having a stop valve capable of individually shutting off air supply to the solenoid valve,
the stop valve module includes: a first end and a second end provided at both ends in a longitudinal direction; an upper end surface in which a plurality of upper openings are provided and to which the solenoid valve is detachably connected; a lower end surface in which a plurality of lower openings are provided and to which the supply/exhaust base is connected; and a communication passage group including a plurality of communication passages through which the plurality of upper openings and the lower openings corresponding to the upper openings communicate,
the plurality of communication passages include: a supply communication passage that communicates with the main supply passage to supply air to the solenoid valve; and an exhaust communication passage that communicates with the main exhaust passage to allow exhaust from the solenoid valve to pass therethrough,
the supply communication passage includes: a first supply communication passage extending in the longitudinal direction and having an end on the second end side connected to a supply lower opening among the plurality of lower openings; and a second supply communication passage extending in the longitudinal direction and having an end on the second end side connected to a supply upper opening among the plurality of upper openings,
ends on the first end side of the first and second supply communication passages extend further toward the first end side than an outermost communication passage disposed on an extreme first end side in the communication passage group,
the ends on the first end side of the first and second supply communication passages communicate with each other through a passage communication portion, and
the stop valve opens and closes the passage communication portion.

2. The stop-valve-equipped solenoid valve assembly according to claim 1, wherein
the plurality of upper openings are disposed parallel to each other in a row in the longitudinal direction in the upper end surface,
the plurality of lower openings are disposed parallel to each other in a row in the longitudinal direction in the lower end surface,
the stop valve module has a first side surface and a second side surface facing away from each other at both ends in a transverse direction,
in the communication passage group, the plurality of communication passages, excluding the supply communication passage, extend in the vertical direction between the upper openings and the lower openings, and
among the plurality of communication passages, a communication passage extending in the vertical direction and disposed on the first end side with respect to the supply upper opening and the supply lower opening intersects the first and second supply communication passages in a state in which the first and second supply communication passages are disposed on the first side surface side thereof in side view.

3. The stop-valve-equipped solenoid valve assembly according to claim 2, wherein
the first side surface of the stop valve module is provided with a bulging portion projecting outward in the transverse direction and extending in the longitudinal direction, and
the first and second supply communication passages are disposed parallel to each other on an inner side of the bulging portion in the transverse direction.

4. The stop-valve-equipped solenoid valve assembly according to claim 1, wherein
the first and second supply communication passages communicate with the supply lower opening and the supply upper opening through a first communication portion and a second communication portion, and
ends on the second end side of the first and second supply communication passages are respectively connected to the first and second communication portions across side surfaces and bottom surfaces thereof.

5. The stop-valve-equipped solenoid valve assembly according to claim 2, wherein
a valve hole extending along an axis extending in the longitudinal direction is provided in the stop valve module, on the first end side with respect to the passage communication portion, and an end on the second end side of the valve hole is open to the passage communication portion,
the stop valve provided with a valve body at an end on the second end side thereof is slidably accommodated in the valve hole, and,
in the passage communication portion, a valve seat that is disposed on the axis and with which the valve body can be brought into and out of contact in accordance with reciprocation of the stop valve is provided.

6. The stop-valve-equipped solenoid valve assembly according to claim 5, wherein
the stop valve has an operating portion at an end on the first end side thereof and can be reciprocated in the axial direction of the valve hole between a closed position, at which the supply communication passage is closed, and an open position, at which the supply communication passage is open, by operating the operating portion, and
the stop valve module further has a locking mechanism that forms a locking position, at which movement of the stop valve in the axial direction is prevented at the closed position, and a non-locking position, at which movement of the stop valve in the axial direction is allowed.

7. The stop-valve-equipped solenoid valve assembly according to claim 6, wherein
the operating portion has an operating shaft, the operating shaft being rotatably inserted into an operating hole connected to the valve hole,
the locking mechanism includes an engaging portion provided on the operating shaft and an engaged portion provided in the operating hole, and
rotation of the operating shaft enables selective switching between the locking position, at which the engaging portion and the engaged portion are engaged, and the non-locking position, at which the engagement between the engaging portion and the engaged portion is released.

8. The stop-valve-equipped solenoid valve assembly according to claim 6, wherein
the stop valve is provided with a spring member that urges the stop valve in a direction in which the valve body is separated from the valve seat, and
when the operating portion is operated to the non-locking position, the stop valve is moved from the closed position to the open position by an urging force of the spring member.

9. The stop-valve-equipped solenoid valve assembly according to claim 6, wherein
the stop valve is provided with a seal member around the axis, on the first end side with respect to the valve body,
a first exhaust passage communicating with a portion of the supply communication passage downstream of the valve seat, and a second exhaust passage communicating with atmosphere are connected to the valve hole,
a first exhaust opening of the first exhaust passage provided in the valve hole is disposed on the second end side with respect to a second exhaust opening of the second exhaust passage provided in the valve hole, and,
when the stop valve moves to the open position, the seal member moves to a position between the first exhaust opening and the second exhaust opening in the valve hole to shut off communication between the first and second exhaust passages, and, when the stop valve moves to the closed position, the seal member moves to a position on the second end side with respect to the first exhaust opening in the valve hole to allow communication between the first and second exhaust passages through the valve hole.

10. A stop valve module comprising: a supply communication passage through which compressed air to be supplied to a fluid pressure device passes; an exhaust communication passage through which exhaust from the fluid pressure device passes; and a stop valve that opens and closes the supply communication passage, wherein
the stop valve module includes: a first end and a second end provided at both ends in a longitudinal direction; an upper end surface in which a plurality of upper openings are provided; a lower end surface in which a plurality of lower openings are provided; and a communication passage group including a plurality of communication passages through which the plurality of upper openings and the lower openings corresponding to the upper openings communicate,
the communication passage group includes at least the supply communication passage and the exhaust communication passage,
the supply communication passage includes: a first supply communication passage extending in the longitudinal direction and having an end on the second end side connected to a supply lower opening among the plurality of lower openings; and a second supply communication passage extending in the longitudinal direction and having an end on the second end side connected to a supply upper opening among the plurality of upper openings,
ends on the first end side of the first and second supply communication passages extend further toward the first end side than an outermost communication passage disposed on an extreme first end side in the communication passage group,
the ends on the first end side of the first and second supply communication passages communicate with each other through a passage communication portion, and
the stop valve opens and closes the passage communication portion.

## Amended claims

### Amended claims under Art. 19.1 PCT

1. (Amended) A stop-valve-equipped solenoid valve assembly comprising: a plurality of solenoid valves; a supply/exhaust base in which a main supply passage and a main exhaust passage are formed; and output ports provided corresponding to the plurality of solenoid valves, communication states between the output ports, the main supply passage, and the main exhaust passage being switched by individually operating the plurality of solenoid valves, wherein
the solenoid valve assembly is configured by disposing, between each of the plurality of solenoid valves and the supply/exhaust base, a stop valve module having a stop valve capable of individually shutting off air supply to the solenoid valve,
the stop valve module includes: a first end and a second end provided at both ends in a longitudinal direction; an upper end surface in which a plurality of upper openings are provided and to which the solenoid valve is detachably connected; a lower end surface in which a plurality of lower openings are provided and to which the supply/exhaust base is connected; and a communication passage group including a plurality of communication passages through which the plurality of upper openings and the lower openings corresponding to the upper openings communicate,
the plurality of communication passages include: a supply communication passage that communicates with the main supply passage to supply air to the solenoid valve; and an exhaust communication passage that communicates with the main exhaust passage to allow exhaust from the solenoid valve to pass therethrough,
the supply communication passage includes: a first supply communication passage extending in the longitudinal direction and having an end on the second end side connected to a supply lower opening among the plurality of lower openings; and a second supply communication passage extending in the longitudinal direction and having an end on the second end side connected to a supply upper opening among the plurality of upper openings,
the first and second supply communication passages each have a vertically elongated cross-sectional shape with a height in the vertical direction greater than a width,
ends on the first end side of the first and second supply communication passages extend further toward the first end side than an outermost communication passage disposed on an extreme first end side in the communication passage group,
the ends on the first end side of the first and second supply communication passages communicate with each other through a passage communication portion, and
the stop valve opens and closes the passage communication portion.

2. The stop-valve-equipped solenoid valve assembly according to claim 1, wherein
the plurality of upper openings are disposed parallel to each other in a row in the longitudinal direction in the upper end surface,
the plurality of lower openings are disposed parallel to each other in a row in the longitudinal direction in the lower end surface,
the stop valve module has a first side surface and a second side surface facing away from each other at both ends in a transverse direction,
in the communication passage group, the plurality of communication passages, excluding the supply communication passage, extend in the vertical direction between the upper openings and the lower openings, and
among the plurality of communication passages, a communication passage extending in the vertical direction and disposed on the first end side with respect to the supply upper opening and the supply lower opening intersects the first and second supply communication passages in a state in which the first and second supply communication passages are disposed on the first side surface side thereof in side view.

3. The stop-valve-equipped solenoid valve assembly according to claim 2, wherein
the first side surface of the stop valve module is provided with a bulging portion projecting outward in the transverse direction and extending in the longitudinal direction, and
the first and second supply communication passages are disposed parallel to each other on an inner side of the bulging portion in the transverse direction.

4. (Amended) The stop-valve-equipped solenoid valve assembly according to claim 1, wherein
the first and second supply communication passages communicate with the supply lower opening and the supply upper opening through a first communication portion and a second communication portion extending in the vertical direction,
cross-sectional shapes of the first and second communication portions in a direction orthogonal to the direction in which the first and second communication portions extend are square shapes, and
ends on the second end side of the first and second supply communication passages are connected to the first and second communication portions across side surfaces and bottom surfaces on the first end side thereof.

5. The stop-valve-equipped solenoid valve assembly according to claim 2, wherein
a valve hole extending along an axis extending in the longitudinal direction is provided in the stop valve module, on the first end side with respect to the passage communication portion, and an end on the second end side of the valve hole is open to the passage communication portion,
the stop valve provided with a valve body at an end on the second end side thereof is slidably accommodated in the valve hole, and,
in the passage communication portion, a valve seat that is disposed on the axis and with which the valve body can be brought into and out of contact in accordance with reciprocation of the stop valve is provided.

6. The stop-valve-equipped solenoid valve assembly according to claim 5, wherein
the stop valve has an operating portion at an end on the first end side thereof and can be reciprocated in the axial direction of the valve hole between a closed position, at which the supply communication passage is closed, and an open position, at which the supply communication passage is open, by operating the operating portion, and
the stop valve module further has a locking mechanism that forms a locking position, at which movement of the stop valve in the axial direction is prevented at the closed position, and a non-locking position, at which movement of the stop valve in the axial direction is allowed.

7. The stop-valve-equipped solenoid valve assembly according to claim 6, wherein
the operating portion has an operating shaft, the operating shaft being rotatably inserted into an operating hole connected to the valve hole,
the locking mechanism includes an engaging portion provided on the operating shaft and an engaged portion provided in the operating hole, and
rotation of the operating shaft enables selective switching between the locking position, at which the engaging portion and the engaged portion are engaged, and the non-locking position, at which the engagement between the engaging portion and the engaged portion is released.

8. The stop-valve-equipped solenoid valve assembly according to claim 6, wherein
the stop valve is provided with a spring member that urges the stop valve in a direction in which the valve body is separated from the valve seat, and
when the operating portion is operated to the non-locking position, the stop valve is moved from the closed position to the open position by an urging force of the spring member.

9. The stop-valve-equipped solenoid valve assembly according to claim 6, wherein
the stop valve is provided with a seal member around the axis, on the first end side with respect to the valve body,
a first exhaust passage communicating with a portion of the supply communication passage downstream of the valve seat, and a second exhaust passage communicating with atmosphere are connected to the valve hole,
a first exhaust opening of the first exhaust passage provided in the valve hole is disposed on the second end side with respect to a second exhaust opening of the second exhaust passage provided in the valve hole, and,
when the stop valve moves to the open position, the seal member moves to a position between the first exhaust opening and the second exhaust opening in the valve hole to shut off communication between the first and second exhaust passages, and, when the stop valve moves to the closed position, the seal member moves to a position on the second end side with respect to the first exhaust opening in the valve hole to allow communication between the first and second exhaust passages through the valve hole.

10. (Amended) A stop valve module comprising: a supply communication passage through which compressed air to be supplied to a fluid pressure device passes; an exhaust communication passage through which exhaust from the fluid pressure device passes; and a stop valve that opens and closes the supply communication passage, wherein
the stop valve module includes: a first end and a second end provided at both ends in a longitudinal direction; an upper end surface in which a plurality of upper openings are provided; a lower end surface in which a plurality of lower openings are provided; and a communication passage group including a plurality of communication passages through which the plurality of upper openings and the lower openings corresponding to the upper openings communicate,
the communication passage group includes at least the supply communication passage and the exhaust communication passage,
the supply communication passage includes: a first supply communication passage extending in the longitudinal direction and having an end on the second end side connected to a supply lower opening among the plurality of lower openings; and a second supply communication passage extending in the longitudinal direction and having an end on the second end side connected to a supply upper opening among the plurality of upper openings,
the first and second supply communication passages each have a vertically elongated cross-sectional shape with a height in the vertical direction greater than a width,
ends on the first end side of the first and second supply communication passages extend further toward the first end side than an outermost communication passage disposed on an extreme first end side in the communication passage group,
the ends on the first end side of the first and second supply communication passages communicate with each other through a passage communication portion, and
the stop valve opens and closes the passage communication portion.
Statement under Article 19(1)
In claims 1 and 10, the first and second supply communication passages each have a vertically elongated cross-sectional shape with a height in the vertical direction greater than a width; ends on the first end side of these supply communication passages extend further toward the first end side than the outermost communication passage; the ends on the first end side communicate with each other through a passage communication portion; and the passage communication portion is opened and closed by the stop valve.
Hence, the invention according to claims 1 and 10 provides an advantage in that the width of the stop valve module is reduced while decrease in the flow rate of compressed air is suppressed as much as possible.
Meanwhile, Document 1 does not disclose a configuration in which the first and second supply communication passages each have a vertically elongated cross-sectional shape with a height in the vertical direction greater than a width.
Furthermore, in claim 4, ends on the second end side of the first and second supply communication passages are connected to the first and second communication portions across side surfaces and bottom surfaces on the first end side thereof.
Hence, the invention according to claim 4 provides, in addition to an advantage in that the width of the stop valve module is further reduced, an advantage in that the degree by which the air flowing from the lower opening through the first and second supply communication passages to the upper opening is throttled is suppressed as much as possible.
That is, because the invention according to claim 4 provides two entirely different advantages achieved by having the above-described configuration, it is not an invention that could have been easily conceived by a person skilled in the art.
